(19) Europäisches Patentamt

European Patent Office

Office européen des brevets

(11) EP 0 630 767 B1

(12) EUROPEAN PATENT SPECIFICATION

(45) Date of publication and mention
of the grant of the patent:
24.09.1997 Bulletin 1997/39

(51) Int. Cl.⁶: B60C 11/00

(21) Application number: 94304315.8

(22) Date of filing: 15.06.1994

(54) Pneumatic tyre

Luftreifen

Bandage pneumatique

(84) Designated Contracting States:
DE FR GB

(30) Priority: 17.06.1993 JP 172385/93

(43) Date of publication of application:
28.12.1994 Bulletin 1994/52

(73) Proprietor: Sumitomo Rubber Industries Ltd.
Kobe-shi, Hyogo-ken (JP)

(72) Inventor: Ohtsu, Akihiro
Kakogawa-shi, Hyogo-ken (JP)

(74) Representative: Stewart, Charles Geoffrey
SP TYRES UK LIMITED
Technical Division
Fort Dunlop, Erdington, Birmingham B24 9QT
(GB)

(56) References cited:
EP-A- 0 114 594          EP-A- 0 324 605
US-A- 4 936 364

**Description**

The present invention relates to a pneumatic tyre, more particularly to an improvement in a tread pattern which is capable of simultaneously generating three different tones sounding as a consonance.

In general, a tyre is provided in the tread portion with a plurality of axial grooves to improve drainage, road grip and the like. Such axial grooves, however, inevitably generate a noise sound during running.

Hitherto, therefore, in order to reduce such a running noise, many attempts have been made, which are roughly classified into two methods: one is to reduce the amplitude of the noise sound pressure; and the other is to flatten the peaked frequency spectrum of the sound.

For example, Japanese patent application laid-open No. JP-A-59-140104 teaches a method classified as the latter method, wherein the number of tread design cycles in one tread half is differed from that in the other tread half so as to have mutually a difference in the range of from 5 to 50 %, preferably from 10 to 30%.

In such a method, however, it was found that a harsh sound disagreeable to the ear often occurred even when the design cycle number difference was set in the preferable range, and it was difficult to flatten the frequency spectrum.

EP-A-0324605 discloses a tyre having a basic rib and at least one chord rib, each rib comprising a plurality of basic pitch elements having the same pitch length wherein the pattern of sound from the basic rib and the chord rib have a consonance relation.

It is therefore, an object of the present invention to provide a pneumatic tyre, wherein the running noise or disagreeable sound during running is reduced, and in which drifting to one side of the vehicle is prevented.

According to the present invention, a pneumatic tyre comprises a tread being axially divided by two circumferential grooves into three annular parts, a first annular part, a second annular part and a third annular part, each defining part of a ground contacting region of the tread, the first annular part being centred on the tyre equator, the second annular part being positioned on one side of the first annular part, the third annular part being positioned on the other side of the first annular part, each of the three annular parts being provided with a plurality of axial grooves arranged circumferentially of the tyre at a pitch length, the pitch length being constant in each annular part, but different from those of the remaining two annular parts so that the tread is provided with three different pitch lengths, characterised in that the ratio of the reciprocals of the three pitch lengths being equal to the ratio of the three frequencies of the three tones of a consonance which is one selected from the group consisting of major triads and minor triads, and in the differences between the three pitch lengths, the difference between the pitch lengths of the second and third annular parts is a minimum.

Accordingly, during running, the axial grooves in each annular portion generate a sound (so-called pattern noise) the peak in the sound pressure level of which has one of the three tones of a consonance. Accordingly, from the entire tread, three different tones are generated, which sound together in a harmonious combination, and the overall sound becomes agreeable to the ear.

An embodiment of the present invention will now be described in detail in conjunction with the accompanying drawings, in which:

Fig.1 is a cross sectional view of a tyre according to the present invention;
Fig.2 is a perspective view thereof; and
Fig.3 is a view showing the ground contacting region.

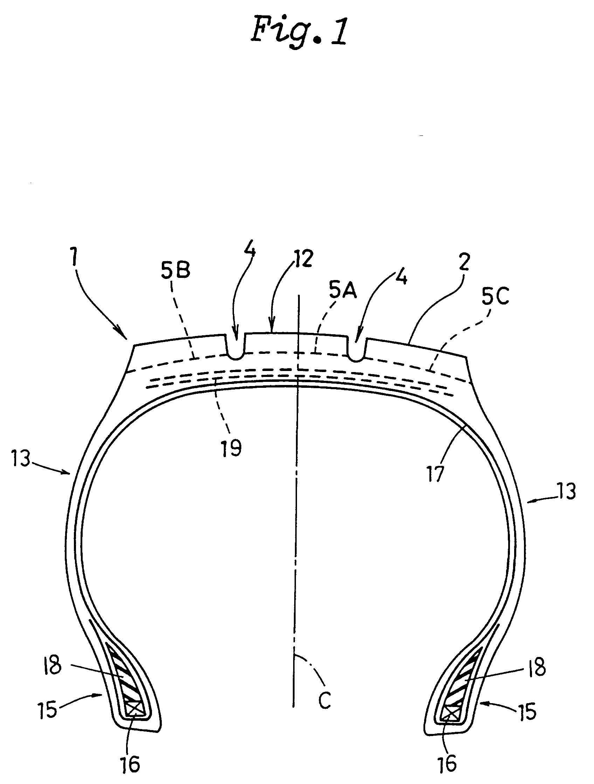

In Figs.1 to 3, the pneumatic tyre 1 of the invention comprises a tread portion 12 with a pair of tread edges, a pair of bead portions 15, a pair of sidewall portions 13 extending from the tread edges to the bead portions, a bead core 16 disposed in each of the bead portions 15, a carcass 17 extending between the bead portions 15 through the tread portion 12 and sidewall portions 13 and turned up around the bead cores 16 from the axially inside to outside of the tyre, and a belt 19 disposed axially inside the tread portion and outside the carcass 17.

In this embodiment, a bead apex 18 made of hard rubber having a triangular sectional shape is disposed between each of the carcass turned up portions and the main portion of the carcass 17. The bead apex 18 extends radially outwardly from the radially outer side of the above-mentioned bead core 16.

The carcass 17 in this embodiment comprises one carcass ply of organic fibre cord, e.g. nylon, polyester, rayon, aromatic polyamide or the like, arranged radially at an angle of 75 to 90 degrees with respect to the tyre equator C.

The belt 19 in this embodiment comprises two cut-end cross plies of parallel cords inclined at an angle of 10 to 70 degrees with respect to the tyre equator C. For the belt cords, steel cords are used, but organic fibre cords, e.g. nylon, rayon, aromatic polyamide or the like may be used.

The tread portion 12 is provided with two circumferential grooves 4 to divide the tread width into three annular portions, that is, a first annular portion 3A defined between the two grooves 4 and centred on the tyre equator C, and a second annular portion 3B and a third annular portion 3C each positioned axially outside of each circumferential groove 4.

The first annular portion 3A is provided with a plurality of first axial grooves 5A arranged at a first pitch length PA of a constant value in the tyre circumferential direction of the tyre.

The second annular portion 3B is provided with a plurality of second axial grooves 5B arranged at a second pitch length PB of a constant value in the tyre circumferential direction.

The third annular portion 3C is provided with a plurality of third axial grooves 5C arranged at a second pitch length PC of a constant value in the tyre circumferential direction.

The first, second and third axial grooves 5A, 5B and 5C extend across the entire width of the respective annular portions 3A, 3B and 3C.

In this embodiment, axial grooves provided in the tread portion are only the above-mentioned axial grooves 5A, 3B and 5C, and all the axial grooves are straight constant-width grooves being parallel to the tyre axial direction.

The first, second and third pitch lengths PA, PB and PC are different from each other.

In this embodiment, the largest is the first pitch length PA, and accordingly the smallest is PB or PC. For convenience sake, the third pitch length PC is smallest. Therefore, PA > PB > PC.

The first, second and third pitch lengths PA, PB and PC are set such that the ratio (1/PA : 1/PB : 1/PC) of the reciprocals thereof is equal to the ratio (fA :fB :fC ) of the three frequencies (fA, fB and fC) of the three tones of one consonance which is selected from the group consisting of major triads and minor triads typically known as (Do, Mi, Sol), (Fa, La, Do), (Sol, Si, Re), (Mi, Sol, Si) and the like.

The relative frequency of the musical scale is shown in the following table.

```
           Relative Frequency

=======:==============================:============

Low             :

      C (Do) : 2^(0)         =  1

      D (Re) : 2^(2/12)      =  1.122462048309373

      E (Mi) : 2^(4/12)      =  1.259921049894873

      F (Fa) : 2^(5/12)      =  1.334839854170034

      G (Sol): 2^(7/12)      =  1.498307076876682

      A (La) : 2^(9/12)      =  1.681792830507429

      B (Si) : 2^(11/12)     =  1.887748625363387

Octave

      C (Do) : 2^(1)         =  2

      D (Re) : 2^(1+2/12)    =  2.244924096618746

      E (Mi) : 2^(1+4/12)    =  2.519842099789746

High            :

=======:==============================:============

Note)  2^(x) = 2^x
```

|  | Reciprocal |
|---|---|
| 1 / 2^(7/12) | = 0.6674199270850172 |
| 1 / 2^(4/12) | = 0.7937005259840997 |
| 1 / 2^(3/12) | = 0.8408964152537146 |
| 1 / 2^(0) | =1 |

In case of Major triads, the frequency ratio

(fA : fB : fC )

$= 2^{\wedge}(0) : 2^{\wedge}(4/12) : 2^{\wedge}(7/12)$

$= 1 : 1.259921049894873 : 1.498307076876682$

In case of Minor triads, the frequency ratio

( fA : fB : fC )

$= 2^{\wedge}(0) : 2^{\wedge}(3/12) : 2^{\wedge}(7/12)$

$= 1 : 1.189207115002721 : 1.498307076876682$

According to the invention, therefore, the above-mentioned ratio (1/PA : 1/PB : 1/PC) is

(1 : 1.26 : 1.50) or (1 : 1.19 : 1.50).

Accordingly, the pitch length ratio (PA : PB : PC) is

(1 : 0.80 : 0.67) or (1 : 0.84 : 0.67).

In order to generate a sound the base tone of which is FR Hz at a running speed of RS kilometre/hour, the pitch length Px is calculated as follows.

The number NG of the axial grooves which should encounter or contact the ground per 1 second equals to the value of the frequency FR.

$$NG = FR$$

The total running length RL per 1 second when running at a speed of RS (kilometres/hour) equals to RS x 1000/36 (cm).

$$RL = RS \times 1000/36 \text{ (cm)}$$

Therefore, the pitch length Px is obtained by dividing the RL by the NG.

$$Px = RL / NG$$

For example, when FR = 1000 Hz and RS = 100 kilometre/hour,

$$Px = (100 \times 1000/36 \text{ cm}) / 1000$$
$$= 2.7777777 \text{ cm}$$
$$= 2.8 \text{ cm}$$

Therefore, the above-mentioned pitch lengths PA, PB and PC are set as follows:

$$PA = 2.8 \text{ cm}$$

$$PC = 2.8 \times 0.67$$
$$= 1.876$$
$$= 1.88 \text{ cm}$$

$$PB = (2.8 \times 0.80) \text{ or } (2.8 \times 0.84)$$
$$= 2.24 \text{ or } 2.353$$
$$= 2.24 \text{ cm or } 2.35 \text{ cm}$$

In the above explained example, as the pitch lengths are PA > PB > PC, the order of the pitch lengths in the axial direction is

(Middle : Long : Short) or (Short : Long : Middle).

On the other hand, it is desirable to minimise the pitch length difference between the right side and left side of the tread portion to prevent drifting to one side of a vehicle. Therefore, when the ratio of (1 : 0.80 : 0.67) is selected for the pitch lengths (PA, PB and PC), it is preferable that

(PA : PB : PC) = (1 : 0.80 : 0.67).

Therefore, the order of lengths is

(Middle : Long : Short) or (Short : Long : Middle)

the same as above.

However, when the ratio of (1 : 0.84 : 0.67) is selected, it is preferable that

(PA : PB : PC) is (0.67 : 1 : 0.84).

The order is changed as

(Middle : Short : Long) or (Long : Short : Middle).

As explained above, by setting the first, second and third pitch lengths PA, PB and PC at the above-explained specific ratio, the sounds generated from the three annular parts 3A, 3B and 3C can make a harmonious combination which is agreeable to the ear although the sounds are generally regarded as a harsh sound when sounds individually.

Further, by changing the order of the pitch arrangement in the axial direction of the tyre in accordance with the selected ratio, inevitable asymmetry of the tread pattern can be diminished, and drifting to one side which is liable to occur during high speed straight running is decreased.

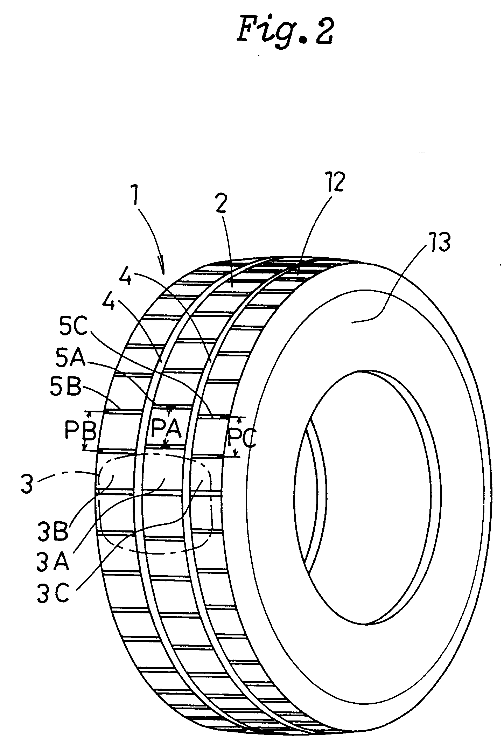

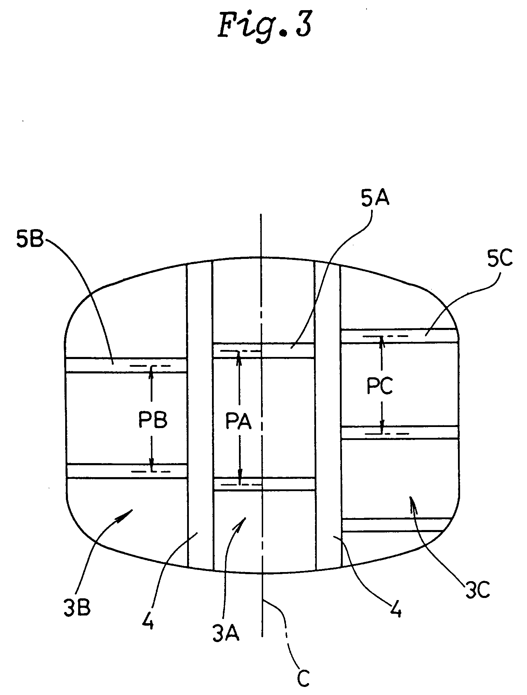

As known from the above description, the present invention is intended for producing three peaks in the frequency spectrum rather than flattening the peaks. Therefore, it is desirable that the sound pressure levels at the three peaks are substantially the same level. If a large difference exists therebetween, the harmony is destroyed. In order to avoid this, the circumferential grooves 4 preferably divide the actual ground contacting width into three equal widths as shown in Fig.3. Therefore, as shown in Fig.2 by an imaginary line 3, if the actual ground contacting width is narrower than the tread width defined between the tread edges, the width between the two circumferential grooves 4 is preferably decreased.

In this embodiment shown in Figs.1, 2 and 3, the actual ground contacting width equals to the tread width between the tread edges.

For example, due to a relatively small radius of tread curvature, if the actual ground contacting width is varied according to a change in the service condition, the ground contacting width should be defined under a standard condition such that the tyre is mounted on a regular rim (approved rim), and inflated to a standard inner pressure, then loaded with a standard load.

Thus, the present invention can be applied to every kind of tyre, e.g. passenger car tyre, truck/bus tyre, motorcycle tyre and the like.

Further, it is also possible to employ a chord which is the above-mentioned triad whose one tone is replaced by one-octave higher or lower tone as follows.

For example,

(Do) : $2^{(0)} = 1$     (replaced)
(Fa) : $2^{(5/12)} = 1.33$
(La) : $2^{(9/12)} = 1.68$

instead of

(Fa) : $2^{(5/12)}$
(La) : $2^{(9/12)}$
(Do) : $2^{(12/12)}$,

or

(Re) : $2^{(2/12)} = 1.12$     (replaced)
(Sol): $2^{(7/12)} = 1.50$
(Si) : $2^{(11/12)} = 1.89$

instead of

(Sol): $2^{(7/12)}$
(Si) : $2^{(11/12)}$
(Re) : $2^{(1+2/12)}$.

## Claims

1. A pneumatic tyre comprising a tread (12) being axially divided by two circumferential grooves (4) into three annular parts, a first annular part (3A), a second annular part (3B) and a third annular part (3C), each defining part of a ground contacting region of the tread, the first annular part (3A) being centred on the tyre equator, the second annular part (3B) being positioned on one side of the first annular part (3A), the third annular part (3C) being positioned on the other side of the first annular part (3A), each of the three annular parts (3A,3B, and 3C) being provided with a plurality of axial grooves (5A,5B and 5C) arranged circumferentially of the tyre at a pitch length (PA,PB and PC), the pitch length (PA,PB and PC) being constant in each annular part (3A,3B,3C), but different from those of the remaining two annular parts so that the tread (12) is provided with three different pitch lengths (PA,PB and PC), the ratio of the reciprocals of the three pitch lengths (PA,PB,PC) being equal to the ratio of the three frequencies of the three tones of a consonance which is one selected from the group consisting of major triads and minor triads, characterised in that the differences between the three pitch lengths (PA,PB,PC), the difference between the pitch lengths (PB and PC) of the second and third annular parts (3B and 3C) is a minimum.

2. A pneumatic tyre according to claim 1, characterised in that said ratio of the reciprocals is (1 : 1.26 : 1.50) and the order of the arrangement of the three pitch lengths in the axial direction of the tyre is (Middle : Long : Short).

3. A pneumatic tyre according to claim 1, characterised in that said ratio of the reciprocals is (1 : 1.19 : 1.50) and the order of the arrangement of the three pitch lengths in the axial direction of the tyre is (Middle : Short : Long).

**Patentansprüche**

1. Pneumatischer Reifen umfassend eine Lauffläche (12), die axial durch zwei Umfangsrillen (4) in drei ringförmige Teile geteilt wird, einen ersten ringförmigen Teil (3A), einen zweiten ringförmigen Teil (3B) und einen dritten ringförmigen Teil (3C), wobei jeder einen Teil eines bodenberührenden Bereichs der Lauffläche festlegt, der erste ringförmige Teil (3A) auf dem Reifenäquator zentriert ist, der zweite ringförmige Teil (3B) auf einer Seite des ersten ringförmigen Teils (3A) positioniert ist, der dritte ringförmige Teil (3C) auf der anderen Seite des ersten ringförmigen Teils (3A) positioniert ist, jeder der drei ringförmigen Teile (3A, 3B und 3C) mit einer Vielzahl axialer Rillen (5A, 5B und 5C) versehen ist, die in Umfangsrichtung des Reifens bei einer Teilungslänge (PA, PB und PC) angeordnet sind, die Teilungslänge (PA, PB und PC) in jedem ringförmigen Teil (3A, 3B, 3C) konstant, aber verschieden von denjenigen der verbleibenden zwei ringförmigen Teile ist, so daß die Lauffläche (12) mit drei verschiedenen Teilungslängen (PA, PB und PC) versehen ist, das Verhältnis der Kehrwerte der drei Teilungslängen (PA, PB, PC) gleich dem Verhältnis der drei Frequenzen der drei Töne einer Konsonanz ist, die eine aus der Gruppe ausgewählte ist, die aus Durdreiklängen und Molldreiklängen besteht, dadurch **gekennzeichnet,** daß bei den Unterschieden zwischen den drei Teilungslängen (PA, PB, PC) der Unterschied zwischen den Teilungslängen (PB und PC) der zweiten und dritten ringförmigen Teile (3B und 3C) ein Minimum ist.

2. Pneumatischer Reifen nach Anspruch 1, dadurch **gekennzeichnet,** daß das Verhältnis der Kehrwerte (1 : 1,26 : 1,50) beträgt und die Reihenfolge der Anordnung der drei Teilungslängen in der axialen Richtung des Reifens (Mittel : Lang : Kurz) ist.

3. Pneumatischer Reifen nach Anspruch 1, dadurch **gekennzeichnet,** daß das Verhältnis der Kehrwerte (1 : 1,19 : 1,50) beträgt und die Reihenfolge der Anordnung der drei Teilungslängen in der axialen Richtung des Reifens (Mittel : Kurz : Lang) ist.

**Revendications**

1. Pneumatique comprenant une bande de roulement (12) divisée axialement par deux rainures circonférentielles (4) en trois parties annulaires, une première partie annulaire (3A), une seconde partie annulaire (3B) et une troisième partie annulaire (3C), chacune définissant une partie d'une zone de contact avec le sol de la bande de roulement, la première partie annulaire (3A) étant centrée sur l'équateur du pneumatique, la seconde partie annulaire (3B) étant placée d'un côté de la première partie annulaire (3A), la troisième partie annulaire (3C) étant placée de l'autre côté de la première partie annulaire (3A), chacune des trois parties annulaires (3A, 3B et 3C) étant pourvue de plusieurs rainures axiales (5A, 5B, et 5C) agencées sur la circonférence du pneumatique à une certaine longueur de pas (PA, PB et PC), la longueur de pas (PA, PB et PC) étant constante dans chaque partie annulaire (3A, 3B, 3C), mais différente de celles des deux parties annulaires restantes de sorte que la bande de roulement (12) est pourvue de trois longueurs de pas différentes (PA, PB et PC), le rapport des inverses des trois longueurs de pas (PA, PB, PC) étant égal au rapport des trois fréquences des trois tons d'une consonance qui est choisie dans le groupe constitué d'accords parfaits majeurs et d'accords parfaits mineurs, caractérisé en ce que, parmi les différences entre les trois longueurs de pas (PA, PB, PC), la différence entre les longueurs de pas (PB et PC) des seconde et troisième parties annulaires (3B et 3C) est minimale.

2. Pneumatique selon la revendication 1, caractérisé en ce que ledit rapport des inverses est
(1 : 1,26 : 1,50)
et en ce que l'ordre de l'agencement des trois longueurs de pas dans la direction axiale du pneumatique est
(Moyenne : Longue : Courte).

3. Pneumatique selon la revendication 1, caractérisé en ce que ledit rapport des inverses est
(1 : 1,19 : 1,50)
et en ce que l'ordre de l'agencement des trois longueurs de pas dans la direction axiale du pneumatique est
(Moyenne : Courte : Longue).

# Fig.1

# Fig.2

# Fig.3